# EUROPEAN PATENT SPECIFICATION

(11) **EP 2 424 279 B1**
(45) Date of publication and mention of the grant of the patent: **31.07.2013**
(21) Application number: 10766641.4
(22) Date of filing: 22.04.2010
(51) Int. Cl.: H04L 12/58, H04W 4/12

(54) **METHOD FOR PROCESSING GROUP MESSAGES, SERVICE DELIVERY PLATFORM AND ASSOCIATED EQUIPMENT**
VERFAHREN ZUR VERARBEITUNG VON GRUPPENNACHRICHTEN, DIENSTLIEFERUNGSPLATTFORM UND AUSRÜSTUNG DAFÜR
PROCÉDÉ POUR UN TRAITEMENT DE MESSAGES DE GROUPE, PLATEFORME DE DISTRIBUTION DE SERVICE ET ÉQUIPEMENT ASSOCIÉ

(30) Priority: 22.04.2009 CN 200910137302
(43) Date of publication of application: 29.02.2012
(73) Proprietor: Huawei Technologies Co., Ltd., Shenzhen, Guangdong 518129 (CN)
(72) Inventor: ZHANG, Fengming, Shenzhen Guangdong 518129 (CN); YAN, Wei, Shenzhen Guangdong 518129 (CN)
(74) Representative: Isarpatent
(86) International application number: PCT/CN2010/072024
(87) International publication number: WO 2010/121551

(56) References cited:
- CN-A- 1 812 602
- CN-A- 1 917 667
- CN-A- 101 155 331
- CN-A- 101 188 813
- CN-A- 101 335 913
- US-B1- 7 409 428

## Description

### FIELD OF THE INVENTION

The present invention relates to the field of communications technologies, and in particular, to a group message processing method and a Service Delivery Platform (SDP).

### BACKGROUND OF THE INVENTION

As various value-added services quickly develop, in order to help a carrier or a service provider to release a new value-added service in time, an SDP is introduced in the prior art, so that the carrier or the service provider may rapidly implement the value-added service through the platform.

At present, a value-added service referred to as a group message service exists, for example, a mobile phone e-paper service, and the service provider may deliver a group message (that is, e-paper) to a user who subscribes to the mobile phone e-paper service through the SDP.

In the prior art, a process for delivering the group message is substantially as follows:
1. The SDP receives a group message sent by the service provider.
2. A Service Access Gateway (SAG) in the SDP disassembles the group message into individual messages and delivers the individual messages to a service bus in the SDP according to numbers of receivers, in which each message corresponds to a unique destination user terminal.
3. For each message, the service bus invokes an interface of a Business Support System (BSS) agent in the SDP, so as to complete accounting and authentication.
4. A message that is successfully accounted and authenticated is delivered to a Network Access Gateway (NAG) of the SDP, and a message that fails to be accounted and authenticated is not delivered.
5. The NAG delivers a received message to a message center.
6. The message center delivers the message to a user terminal.

The forgoing technical solution enables delivery of a multi-domain group message, in which the so-called multi-domain group message refers to that receivers of the group message include multiple domains, for example, multiple countries.

However, it can be seen from the technical solution in the prior art that, the SAG in the SDP disassembles the group message into several sub-messages, in which each sub-message corresponds to a unique destination user terminal, that is to say, the number of the sub-messages that are disassembled is equal to the number of the destination user terminals of the group message. After disassembling, all of the sub-messages need to be transmitted in the SDP. Therefore, when the number of the destination user terminals of the group message is huge, a large quantity of sub-messages is generated in the SDP, and the SDP needs to consume lots of resources to process these sub-messages, which greatly increases a burden of the SDP.

US 7,409,428 discloses systems and methods for providing message communication among multiple communication gateways. In particular, systems and methods for providing non-voice message delivery to intended recipients with increased speed and reliability to multiple users on multiple platforms. The systems and methods relate to non-voice messaging to multiple messaging gateways. In at least one embodiment, the systems and methods include Internet based electronic messaging using a messaging subsystem configured to optimize text message delivery to communication gateways.

### SUMMARY OF THE INVENTION

Embodiments of the present invention provide a group message processing method, an SDP, and a related device, which can decrease a burden of the SDP.

A group message processing method provided in an embodiment of the present invention includes: receiving, by an SAG, a group message sent to destination terminals, in which the group message includes destination terminal information; and disassembling, by the SAG, the group message into at least two sub-group messages according to access codes that correspond to the destination terminal information, in which the destination terminal information in each sub-group message has the same access code, and sending the sub-group messages to an NAG, so that the NAG disassembles the sub-group messages into sub-messages according to the destination terminal information included in the sub-group messages, in which each sub-message corresponds to a piece of unique destination terminal information, and sends the sub-messages to corresponding destination terminals.

An SDP provided in an embodiment of the present invention includes: an SAG, configured to receive a group message sent to destination terminals, in which the group message includes destination terminal information, disassemble the group message into at least two sub-group messages according to access codes that correspond to the destination terminal information, in which the destination terminal information in each sub-group message has the same access code, and send the sub-group messages to an NAG; and the NAG, configured to receive the sub-group messages sent by the SAG, disassemble the sub-group messages into sub-messages according to the destination terminal information included in the sub-group messages, in which each sub-message corresponds to a piece of unique destination terminal information, and send the sub-messages to corresponding destination terminals.

It can be seen from the foregoing technical solutions that the present invention has the following advantages.

In the technical solutions according to the embodiments of the present invention, after the group message is received, the group message is disassembled according to the access codes that correspond to the destination terminal information in the group message, in which after disassembly, the destination terminal information in each sub-group message has the same access code, and then accounting and authentication is performed on the sub-group messages. As the number of the destination terminals of the group message is large, and some destination terminals have the same domain characteristic, that is, have the same access code, compared with the prior art, after the group message is disassembled into the sub-group messages in the embodiments of the present invention, the number of the messages that are transmitted in the SDP may be effectively reduced, thereby decreasing the burden of the SDP.

### BRIEF DESCRIPTION OF THE DRAWINGS

FIG. 1 is a schematic diagram of a first embodiment of a group message processing method of the present invention;
FIG. 2 is a schematic diagram of a second embodiment of a group message processing method of the present invention;
FIG. 3 is a schematic diagram of an embodiment of an SDP of the present invention;
FIG. 4 is a schematic diagram of an embodiment of an SAG of the present invention;
FIG. 5 is a schematic diagram of an embodiment of a service bus of the present invention; and
FIG. 6 is a schematic diagram of an embodiment of an NAG of the present invention.

### DETAILED DESCRIPTION OF THE EMBODIMENTS

Embodiments of the present invention provide a group message processing method, an SDP, and a related device, so as to decrease a burden of the SDP.

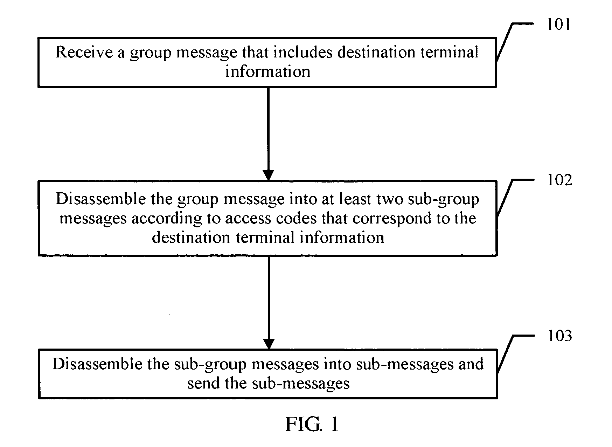

Referring to FIG. 1, a first embodiment of a group message processing method of the present invention includes:
101: Receive a group message that is sent to destination terminals and includes destination terminal information.
   When a carrier or a service provider needs to send a group message through an SDP, the group message to be sent is sent to an SAG of the SDP first, in which the group message carries destination terminal information to instruct the SDP to send the group message to each destination terminal respectively according to the destination terminal information.
102: Disassemble the group message into at least two sub-group messages according to access codes that correspond to the destination terminal information.
   In this embodiment, the number of the destination terminals of the group message is large, and different destination terminals may have the same or different domain characteristics, in which the domain characteristic may be identified by using an access code, and the access code may be a part of the destination terminal information, or may be obtained by querying a preset corresponding relation according to the destination terminal information.
   After determining the access codes of all the destination terminal information, the SAG of the SDP classifies the group message according to the access codes, to generate at least two sub-group messages, in which each sub-group message carries several pieces of destination terminal information, the destination terminal information in each sub-group message has the same access code, and the access codes of the destination terminal information in different sub-group messages are different.
   It should be noted that, the number of pieces of the destination terminal information carried in each sub-group may be limited, which is mainly dependent on a policy of the carrier. If the number of pieces of the destination terminal information that are included in each sub-group message obtained after disassembly is greater than a preset threshold value, the sub-group messages need to be further disassembled, till the number of pieces of the destination terminal information included in each sub-group message is smaller than or equal to the threshold value.
   If the number of pieces of the destination terminal information that are included in each of the sub-group messages obtained after the first disassembly is smaller than or equal to the threshold value, the access codes of the destination terminal information in different sub-group messages among the sub-group messages are different; and if some sub-group messages are further disassembled due to the limitation of the number of pieces of the destination terminal information, several sub-group messages having the same access code exist.
103: Disassemble the sub-group messages into sub-messages and send the sub-messages.

After disassembling the group message into several sub-group messages, the SAG of the SDP may send these sub-group messages to an NAG of the SDP.

The NAG of the SDP disassembles the sub-group messages into several sub-messages according to the destination terminal information included in the sub-group messages, in which each sub-message corresponds to a piece of unique destination terminal information, that is, the number of the sub-messages disassembled from the sub-group messages is equal to the number of pieces of the destination terminal information included in the sub-group messages.

After the sub-group messages are disassembled into the sub-messages, the NAG of the SDP sends the sub-messages to corresponding destination terminals, and the specific sending process is not limited herein.

In this embodiment, after receiving the group message, the SDP disassembles the group message according to the access codes that correspond to the destination terminal information in the group message, in which after disassembly, the destination terminal information in each sub-group message has the same access code. As the number of the destination terminals of the group message is large, and some destination terminals have the same domain characteristic, that is, have the same access code, compared with the prior art, after the group message is disassembled into the sub-group messages in the embodiment of the present invention, the number of messages that are transmitted in the SDP may be effectively reduced, thereby decreasing the burden of the SDP.

In this embodiment, the group message processing method of the present invention is described from a view of the SAG. It should be noted that, if accounting is involved in the process of sending the group message, accounting and authentication may be performed on each sub-group message in this embodiment. That is, after the SAG of the SDP disassembles the group message into several sub-group messages, a service bus of the SDP invokes a BSS agent of the SDP to perform accounting and authentication on each sub-group message. The service bus of the SDP sends a sub-group message that is successfully accounted and authenticated to the NAG, and the NAG performs a delivery process. Specifically, the following describes the group message processing method in this embodiment of the present invention from a view of the service bus.
(1) The service bus acquires the sub-group messages from the SAG, in which the destination terminal information in each sub-group message has the same access code.
   In this embodiment, after the SAG disassembles the group message into several sub-group messages, if accounting and authentication need to be performed on the sub-group messages, the SAG sends the sub-group messages to the service bus, so that the service bus can receive the sub-group messages from the SAG, in which the destination terminal information included in each of the sub-group messages has the same access code.
(2) The service bus invokes a BSS agent to perform accounting and authentication on each piece of destination terminal information in the sub-group messages.
   After receiving the sub-group messages, the service bus invokes a BSS agent to perform accounting and authentication on each piece of destination terminal information in these sub-group messages, so as to determine the destination terminal information that is successfully accounted and authenticated and the destination terminal information that fails to be accounted and authenticated in the sub-group messages.
(3) The service bus receives an authentication result fed back by the BSS agent.
   After perform accounting and authentication on each destination terminal in the sub-group messages, the BSS agent feeds back an authentication result to the service bus, in which the authentication result includes the destination terminal information that is successfully accounted and authenticated and the destination terminal information that fails to be accounted and authenticated.
(4) The service bus assembles a new sub-group message according to the destination terminal information that is successfully accounted and authenticated in a sub-group message, and sends the new sub-group message to the NAG.
   After receiving the authentication result sent by the BSS agent, the service bus may query and obtain the destination terminal information that is successfully accounted and authenticated from the authentication result, and assembles the destination terminal information that is successfully accounted and authenticated into a new sub-group message, that is, the new sub-group message is a sub-group message that is successfully accounted and authenticated, and then, the service bus sends the new sub-group message to the NAG, so that the NAG delivers the new sub-group message.

It should be noted that in this embodiment, if all of the destination terminal information in a sub-group message is successfully accounted and authenticated, the service bus does not need to reassemble the sub-group message, but instead, may directly forward the sub-group message that is received from the SAG to the NAG.

In this embodiment, as accounting and authentication is performed on the sub-group messages rather than on the sub-messages, time taken for the accounting and authentication may be reduced, thereby effectively improving transmission efficiency of the group message.

It should be understood that, if accounting is not involved in the process of sending the group message, the accounting and authentication process does not need to be performed on the sub-group messages. In a practical application, whether the accounting and authentication process needs to be performed on the sub-group messages depends on the policy of the carrier, and is not limited herein.

The following describes the group message processing method in this embodiment of the present invention from a view of the NAG.
(1) The NAG receives the sub-group messages sent by the SAG.
   In this embodiment, after the SAG disassembles the group message into several sub-group messages, the SAG may send the sub-group messages to the NAG, so that the NAG may receive the sub-group messages from the SAG, in which the destination terminal information included in each of the sub-group messages has the same access code.
(2) The NAG disassembles the sub-group messages into sub-messages according to the destination terminal information included in the sub-group messages, in which each sub-message corresponds to a piece of unique destination terminal information.
   After receiving the sub-group messages sent by the SAG the NAG disassembles the sub-group messages into sub-messages according to the destination tenninal information in the sub-group messages, in which each sub-message corresponds to a piece of unique destination terminal information, that is, the number of the sub-messages that are obtained after disassembly is equal to the number of pieces of the destination terminal information.
(3) The NAG sends the sub-messages to corresponding destination terminals.
   After disassembling the sub-group messages into the sub-messages, the NAG sends the sub-messages to the corresponding destination terminals. In a practical application, the NAG may send the sub-messages to a message center, and then the message center sends the sub-messages to the corresponding destination terminals, and the specific sending manner is not limited herein.

In this embodiment, the NAG receives the sub-group messages, and the sub-group messages are disassembled in the NAG, and therefore, the message is transmitted between network elements in a form of sub-group message in the SDP before arriving at the NAG. As each sub-group message includes several pieces of destination terminal information, and the destination terminal information in each sub-group message has the same access code, compared with the prior art, by transmitting the sub-group messages in the SDP in this embodiment, the number of the messages that are transmitted in the SDP may be effectively reduced, thereby decreasing the burden of the SDP.

The foregoing embodiment is described by taking a process in which the SDP receives and processes the group message as an example. It should be understood that in a practical application, after the SDP processes the group message, another process may also be performed, for example, routing the group message, or another similar scenario of the group message. The foregoing technical solution may be used to process the group message as long as the destination terminals of the group message have domain-related access codes, which is not limited herein.

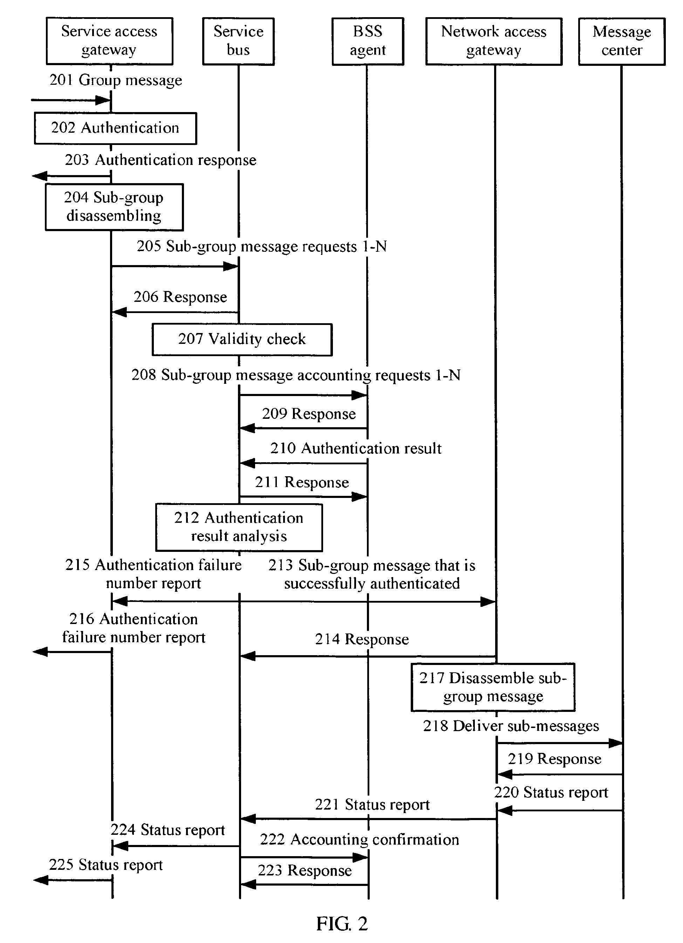

For ease of understanding, the following still describes a group message processing method in an embodiment of the present invention in detail by taking the process in which the SDP processes the group message as an example. Referring to FIG. 2, a second embodiment of a group message processing method of the present invention includes:
201: An SAG receives a group message that is sent to destination terminals.
   It should be noted first that, an SDP in this embodiment may specifically include an SAG, a service bus, a BSS agent, and an NAG, and specific functions and connection relations of these network elements are described in detail in a subsequent SDP embodiment.
   In this embodiment, the SAG receives the group message from a service provider, in which the group message includes destination terminal information.
   For example, the group message received by the SAG is as follows: ("Today is traditional Chinese festival: Spring Festival. Happy Spring Festival to Chinese friends all over the world!", "0861390000000, 08613900000001, 08613900000002, 0015000000, and 0015000002").
   The content of the group message is "Today is traditional Chinese festival: Spring Festival. Happy Spring Festival to Chinese friends all over the world!", and the destination terminal information of the group message is "0861390000000, 08613900000001, 08613900000002, 0015000000, and 0015000002", that is, the group message is to be sent to five user terminals corresponding to the preceding 5 numbers.
   It should be understood that, the SAG may also receive a group message to be sent from a carrier or another service provider, which is not specifically limited herein.
202: The SAG performs authentication on the service provider who sends the group message.
   After receiving the group message, the SAG may perform authentication on the service provider who provides the group message in order to ensure validity of the group message. A specific authentication manner may be judging whether the service provider is in a preset trusted list, and the service provider is determined to be trusted if the service provider is in the trusted list. It should be understood that in a practical application, another manner may also be used to perform authentication on the service provider, which is not limited herein.
   It should be noted that in this embodiment, step 202 is an optional step, and if the SDP does not impose a high requirement on security of the group message, or all service providers are trusted by default, authentication may also not be performed on the service provider.
203: The SAG feeds back an authentication response to the service provider.
204: The SAG performs sub-group disassembling on the group message.
   After confirming that the service provider is trusted, the SAG performs sub-group disassembling on the group message that is sent by the service provider, and a specific process may be:
   Acquire prefix codes or suffix codes of the destination terminal information in the group message, and use the prefix codes or the suffix codes as access codes;
   classify the destination terminal information having the same prefix code or the same suffix code into the same class;
   disassemble the group message into a corresponding number of sub-group messages according to the number of classes of the destination terminal information, in which each sub-group message corresponds to one class of the destination terminal information.

   Specifically, the destination terminal information is "0861390000000, 08613900000001, 08613900000002, 0015000000, and 0015000002", in which the first three digits of each piece of destination terminal information form a prefix code for representing a country where a destination terminal is located, 086 represents China, and 001 represents America. After acquiring the prefix code of each piece of destination terminal information, the SAG may classify the destination terminal information into two classes, and the prefix codes of the two classes are respectively 086 and 001:
   Class 1: "0861390000000, 08613900000001, and 08613900000002"; and
   Class 2: "0015000000 and 0015000002".

   After the destination terminal information is classified into two classes, the group message may be disassembled into two corresponding sub-group messages, that is:
   "086" sub-group message: ("Today is traditional Chinese festival: Spring Festival. Happy Spring Festival to Chinese friends all over the world!", "0861390000000, 08613900000001, and 08613900000002"); and
   "001" sub-group message: ("Today is traditional Chinese festival: Spring Festival. Happy Spring Festival to Chinese friends all over the world!", "0015000000 and 0015000002").

   "086" and "001" may be used as identifiers of the two sub-group messages respectively.
   It should be noted that in this embodiment, the number of the sub-group messages is 2, and in a practical application, if the number of the destination terminals is further increased, and the number of the access codes is further increased, the group message may be accordingly disassembled into more sub-group messages. A specific disassembling process is consistent with the foregoing process, and therefore the details are not described herein again.
   In this embodiment, if the number of pieces of the destination terminal information in each sub-group message is limited, for example, to be 2, the "086" sub-group message is further disassembled into 2 sub-group messages.
   In the following description, a case in which the "086" sub-group message is further disassembled is not considered, that is, the number of pieces of the destination terminal information that are included in the current "086" sub-group message and that of pieces of the destination terminal information that are included in the current "001" sub-group message are both smaller than or equal to a preset threshold value.
205: The SAG sends the sub-group messages obtained after disassembly to the service bus.
   After disassembling the group message, the SAG sends the sub-group messages obtained after disassembly to the service bus.
   The SAG sends sub-group message requests 1 to N to the service bus, in which N is the number of the sub-group messages. In this embodiment, the number of the sub-group messages is 2, and the SAG sends the "086" sub-group message and the "001" sub-group message to the service bus.
206: The service bus feeds back a response to the SAG.
207: The service bus performs a validity check on the received sub-group messages.
   In this embodiment, after receiving the sub-group messages sent by the SAG, the service bus may perform the validity check on specific contents of the sub-group messages, and may specifically check whether the contents of the sub-group messages conform to provisions of a law and a regulation. A check manner and process belong to the prior art, and are not limited herein.
   It should be understood that in this embodiment, step 207 is an optional step, and if the SDP does not impose a high requirement on the validity of the content of the group message, or all group messages are trusted by default, the validity of the sub-group messages may also not be checked.
208: The service bus sends a sub-group message accounting request to the BSS agent.
   After determining that the contents of the sub-group messages is valid, the service bus may send a sub-group message accounting and authentication request to the BSS agent, to request the BSS agent to perform accounting and authentication on the "086" sub-group message and the "001" sub-group message.
   In a process of transmitting a cross-domain group message, the accounting and authentication need to be implemented by a BSS agent corresponding to the destination terminals, and therefore the service bus invokes an interface of a BSS agent of a corresponding sub-domain according to the access codes, that is, a corresponding BSS agent may be requested to perform accounting and authentication. For example, the service bus may respectively determine one BSS agent according to "086" and "001", and send the accounting and authentication request to the corresponding BSS agent through a corresponding interface.
209: The BSS agent feeds back a response to the service bus.
210: The BSS agent feeds back an authentication result to the service bus.
   After receiving the accounting and authentication request sent by the service bus, the BSS agent may perform accounting and authentication on the sub-group messages, specifically by determining whether an account balance of the service provider who sends the group message is sufficient, and optionally further determining whether an account balance of a destination terminal is sufficient if both parties are charged. It should be understood that, a specific accounting and authentication process belongs to the prior art, and is not limited herein.
   After accounting and authentication, a callback interface of the service bus may be invoked to feed back an authentication result to the service bus, in which the authentication result includes an identifier of a sub-group message that is successfully authenticated and an identifier of a sub-group message that fails to be authenticated. In this embodiment, assuming that the "001" sub-group message fails to be authenticated, the authentication result that corresponds to "086" and is fed back by the BSS agent is "authentication success: 086"; and the authentication result that corresponds to "001" and is fed back by the BSS agent is "authentication failure: 001".
   It should be noted that, if accounting and authentication need to be performed on the destination terminals in the accounting and authentication process, a part of the destination terminals in a sub-group message may fail to be accounted and authenticated, and the other part is successfully accounted and authenticated. For example, the "086" sub-group message includes 3 pieces of destination terminal information, in which "08613900000002" fails to be accounted and authenticated, and the other two are successfully accounted and authenticated. In this case, the BSS agent feeds back an authentication result list to the service bus, in which the list includes the destination terminal information that is successfully authenticated and the destination terminal information that fails to be authenticated in the "086" sub-group message, and may specifically be "authentication success: 08613900000000, 08613900000001; and authentication failure: 08613900000002".
211: The service bus feeds back a response to the BSS agent.
212: The service bus analyzes the authentication result.
   After receiving the authentication result fed back by the BSS agent, the service bus may know that the authentication result is that the "001" sub-group message fails to be accounted and authenticated, and "08613900000000" and "08613900000001" in the "086" sub-group message are successfully accounted and authenticated.
   The service bus may reassemble a new sub-group message according to the destination terminal information that is successfully authenticated, and use the new sub-group message as a sub-group message that is successfully authenticated, in which the new sub-group message carries the destination terminal information that is successfully authenticated, a sub-group identifier of the new sub-group message may be the same as or different from the sub-group identifier of the original sub-group message, and it is assumed that the sub-group identifier of the new sub-group message is "086-2".
   It should be noted that, the destination terminal information included in the new sub-group message is limited only in the original sub-group message, that is, assuming that "0015000000" in the "001" sub-group message is successfully authenticated, 3 pieces of destination terminal information are authenticated successfully in total; however, in reassembling the new sub-group message, the three pieces of destination terminal information cannot be included in the same sub-group message, but need to be divided into two new sub-group messages.
213: The service bus sends the sub-group message that is successfully authenticated to the NAG.
   In this embodiment, the service bus may determine that the "086-2" sub-group message is successfully authenticated according to the authentication result, query a corresponding NAG according to the access code "086" of the destination terminals of the sub-group message, and send the "086-2" sub-group message to the NAG.
   It should be noted that, for a cross-domain group message, the SDP platform needs to route the group message to different sub-domain devices that is, NAGs, according to different access codes. Therefore, after determining a corresponding NAG according to "086", the service bus sends the "086" sub-group message to the NAG.
   It should be noted that in this embodiment, the process of invoking, by the service bus, the BSS agent to perform accounting and authentication is an optional step, and if accounting is not involved in the process of sending the group message, the accounting and authentication process does not need to be performed on the sub-group messages. In a practical application, whether the accounting and authentication process needs to be performed on the sub-group messages depends on a policy of the carrier, and is not limited herein.
214: The NAG feeds back a response to the service bus.
215 and 216: The service bus feeds back an authentication failure number report to the service provider through the SAG.
   If a sub-group message fails to be accounted and authenticated, the service bus may feed back an authentication failure number report to the service provider who sends the group message through the SAG, in which the report carries the identifier of the sub-group or the destination terminal information that fails to be accounted and authenticated, or may further carry a cause of the failure in accounting and authentication.
   It should be noted that, if all sub-group messages are successfully accounted and authenticated, steps 215 and 216 may not be performed.
217: The NAG disassembles the sub-group message.
   After receiving the sub-group message that is sent by the service bus, the NAG may further disassembles the sub-group message into several sub-messages according to the destination terminal information carried in the sub-group message, in which each sub-message corresponds to a piece of unique destination terminal information, that is, the number of the sub-messages that are disassembled from the sub-group message is equal to the number of pieces of the destination terminal information that are carried in the sub-group message.
   For example, after receiving the "086-2" sub-group message: ("Today is traditional Chinese festival: Spring Festival. Happy Spring Festival to Chinese friends all over the world!", "0861390000000, and 08613900000001") that is sent by the service bus and carries 2 pieces of destination terminal information, the NAG disassembles the sub-group message into 2 sub-messages, which are respectively:
   1. ("Today is traditional Chinese festival: Spring Festival. Happy Spring Festival to Chinese friends all over the world!", "0861390000000"); and
   2. ("Today is traditional Chinese festival: Spring Festival. Happy Spring Festival to Chinese friends all over the world!". "08613900000001 ").
218: The NAG sends the sub-messages obtained after disassembly to a message center.
   After disassembling the sub-group message, the NAG sends the sub-messages obtained after disassembly to the message center, to request the message center to send each sub-message to a corresponding destination terminal according to the destination terminal information.
219: The message center feeds back a response to the NAG.
220: The message center sends a status report to the NAG.
   After delivering a sub-message to a corresponding destination terminal, the message center sends a status report to the NAG, in which the status report includes the sub-group identifier and the destination terminal information, for indicating that the sub-message is successfully sent.
221: The NAG forwards the status report to the service bus.
   After receiving the status report that is sent by the message center, the NAG transparently transmits the status report to the service bus.
   For a cross-domain group message, the NAG receives a status report corresponding to each piece of destination terminal information from the message center, and forwards the status reports to the service bus in sequence.
222: The service bus sends an accounting confirmation to the BSS agent.
   After receiving the status report sent by the NAG, the service bus may read the sub-group identifier and the destination terminal information (for example, 086, 08613900000000) from the status report, invoke the interface of the corresponding BSS agent according to the sub-group identifier "086", and send an accounting confirmation to the BSS agent to request the BSS agent to perform fee deduction, in which the accounting confirmation may include the destination terminal information.
223: The BSS agent sends a response to the service bus.
   After receiving the accounting confirmation that is sent by the service bus, the BSS agent may perform fee deduction on the destination terminal according to the destination terminal information in the accounting confirmation, and a specific fee deduction process may be implemented in another manner, which specifically belongs to the prior art, and is not limited herein.
224 to 225: The service bus feeds back the status report to the service provider through the SAG.

In this embodiment, after receiving the group message, the SAG disassembles the group message according to the access codes that correspond to the destination terminal information in the group message, in which after disassembly, the destination terminal information in each sub-group message has the same access code, and the access codes of the destination terminal information in different sub-group messages are different. Then, the SAG sends the sub-group messages obtained after disassembly to the service bus, and the service bus invokes the corresponding BSS agent to perform accounting and authentication on the sub-group messages. As the number of the destination terminals of the group message is large, and some destination terminals have the same domain characteristic, that is, have the same access code, compared with the prior art, after the group message is disassembled into the sub-group messages in the embodiment of the present invention, the number of messages that are transmitted in the SDP may be effectively reduced, thereby decreasing a burden of the SDP.

Meanwhile, time taken for accounting and authentication and transmission between the network elements may be effectively reduced with the reduced number of messages, so that transmission efficiency of the group message can be effectively improved.

It should be noted that in this embodiment, the description is given by taking that a mobile phone number is used as destination terminal information and a prefix of the mobile phone number is used as an access code as an example. It should be understood that in a practical application, the destination terminal information and the access code may be of another type, for example, a suffix code, for example, an E-mail address is used as the destination terminal information, and a domain name of the E-mail address is used as the access code; a called number is used as the destination terminal information, and a country code or an area code of the called number is used as the access code. Specifically, the destination terminal information and the access code may also be of another type, and are not limited herein.

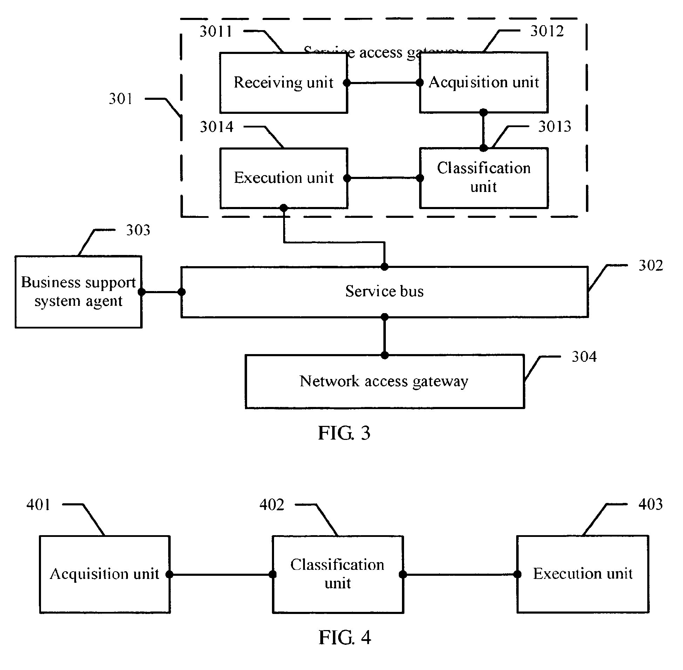

Referring to FIG. 3, an embodiment of an SDP of the present invention specifically includes:
an SAG 301, configured to receive a group message that is sent to destination terminals, in which the group message includes destination terminal information, disassemble the group message into at least two sub-group messages according to access codes that correspond to the destination terminal information, in which the destination terminal information in each sub-group message has the same access code and the access codes of the destination terminal information in different sub-group messages are different, and send the sub-group messages to an NAG 304; and
the NAG 304, configured to receive the sub-group messages that are sent by the SAG 301, disassemble the sub-group messages into sub-messages according to the destination terminal information included in the sub-group messages, in which each sub-message corresponds to a piece of unique destination terminal information, and send the sub-messages to the corresponding destination terminals.

It should be understood that, the preceding SDP that includes only the SAG 301 and the NAG 304 does not need to perform accounting, that is, does not need to perform on the sub-group messages. In a practical application, due to different policies of carriers, accounting may need to be performed on the group message, that is, accounting and authentication may need to be performed on the sub-group messages, and in this case, the SDP in this embodiment may further include:
a service bus 302, configured to receive the sub-group messages that are sent by the SAG 301, invoke a BSS agent 303 to perform accounting and authentication on the sub-group messages, and deliver a sub-group message that is successfully accounted and authenticated to the NAG 304; and
the BSS agent 303, configured to perform accounting and authentication on the sub-group messages as invoked by the service bus 302, and feed back an accounting result to the service bus 302.

The SAG 301 in this embodiment includes:
a receiving unit 3011, configured to receive the group message that is sent to the destination terminals, in which the group message includes the destination terminal information;
an acquisition unit 3012, configured to acquire the destination terminal information from the received group message, and acquire the access codes of the destination terminal information;
a classification unit 3013, configured to classify the destination terminal information that has the same access code into the same class; and
an execution unit 3014, configured to disassemble the group message into a corresponding number of sub-group messages according to the number of classes of the destination terminal information, in which each sub-group message corresponds to one class of the destination terminal information, and send the sub-group messages to the NAG.

For ease of understanding, an operation process in the SDP according to this embodiment is described below by taking a specific application scenario as an example.

The SAG 301 receives the group message that is sent to the destination terminals, in which the group message includes the destination terminal information. The SAG 301 performs authentication on a service provider who sends the group message and feeds back an authentication response to the service provider. After performing authentication on the service provider of the group message, the SAG 301 disassembles the group message into sub-group messages, so that the destination terminal information in each sub-group message has the same access code, and access codes of the destination terminal information in different sub-group messages are different. After the sub-group messages are generated, the SAG 301 sends the sub-group messages obtained after disassembly to the service bus 302.

The service bus 302 checks performs a validity check on the received sub-group messages, and sends a sub-group message accounting request to the BSS agent 303 after the validity check is passed. The BSS agent 303 feeds back an authentication result to the service bus 302, in which the authentication result carries an identifier of a sub-group message that is successfully authenticated and an identifier of a sub-group message that fails to be authenticated. After analyzing the authentication result, the service bus 302 sends the sub-group message that is successfully authenticated to the NAG 304. Meanwhile, the service bus 302 may also feed back an authentication failure number report to the service provider through the SAG 301. A specific accounting and authentication process is consistent with that described in the foregoing method embodiments, and therefore the details are not described herein again.

After receiving the sub-group message, the NAG 304 disassembles the sub-group message, and sends the sub-messages obtained after disassembly to a message center, to request the message center to send each sub-message respectively to a corresponding destination terminal according to the destination terminal information.

After a sub-message is successfully delivered, the NAG 304 may receive a status report from the message center, and forwards the status report to the service bus 302.

After receiving the status report that is sent by the NAG 304, the service bus 302 may read the sub-group identifier and the destination terminal information from the status report, and send an accounting confirmation to the BSS agent 303 to request the BSS agent to perform fee deduction, in which the accounting confirmation may include the destination terminal information. After receiving the accounting confirmation that is sent by the service bus 302, the BSS agent 303 may perform fee deduction on a destination terminal according to the destination terminal information in the accounting confirmation.

The service bus 302 may further feed back a status report to the service provider through the SAG 301.

It should be noted that, a scenario of performing accounting and authenticating on the sub-group messages is described in the foregoing scenario. It should be understood that, if accounting is not involved in the process of sending the group message, the accounting and authentication process does not need to be performed on the sub-group messages. In a practical application, whether the accounting and authentication process needs to be performed on the sub-group messages depends on the policy of the carrier, and is not limited herein.

In this embodiment, after receiving the group message, the SAG 301 disassembles the group message according to the access codes that correspond to the destination terminal information in the group message, in which after disassembly, the destination terminal information in each sub-group message has the same access code, and the access codes of the destination terminal information in different sub-group messages are different. Then, the SAG 301 sends the sub-group messages obtained after disassembly to the service bus 302, and the service bus 302 invokes the corresponding BSS agent 303 to perform accounting and authentication on the sub-group messages. As the number of the destination terminals of the group message is large, and some destination terminals have the same domain characteristic, that is, have the same access code, compared with the prior art, after the group message is disassembled into the sub-group messages in the embodiment of the present invention, the number of the messages that are transmitted in the SDP may be effectively reduced, thereby decreasing the burden of the SDP.

Meanwhile, time taken for accounting and authentication and transmission between the network elements may be effectively reduced with the reduced number of messages, so that transmission efficiency of the group message can be effectively improved.

The following describes an SAG according to an embodiment of the present invention. Referring to FIG. 4, the SAG in this embodiment of the present invention includes:
an acquisition unit 401, configured to acquire destination terminal information from a received group message, and acquire access codes of the destination terminal information;
a classification unit 402, configured to classify the destination terminal information that has the same access code into the same class; and
an execution unit 403, configured to disassemble the group message into a corresponding number of sub-group messages according to the number of classes of the destination terminal information, in which each sub-group message corresponds to one class of the destination terminal information.

In this embodiment, the specific destination terminal information and access codes may have multiple representation forms, for example, an E-mail address is used as the destination terminal information, and a domain name of the E-mail address is used as an access code; a called number is used as the destination terminal information, and a country code or an area code of the called number is used as the access code. Specifically, the destination terminal information and the access code may also be of another type, and are not limited herein.

In the SAG according to this embodiment, after the acquisition unit 401 acquires the access codes of the destination terminal information, the classification unit 402 may classify the destination terminal information according to the access codes. In this case, the execution unit 403 may disassemble the group message into several sub-group messages according to a classification result of the destination terminal information without a need to disassemble the group message into the finest individual messages, so that resources consumed for transmission of the group message in the SDP and for accounting and authentication of the group message are reduced, thereby improving the transmission efficiency of the group message.

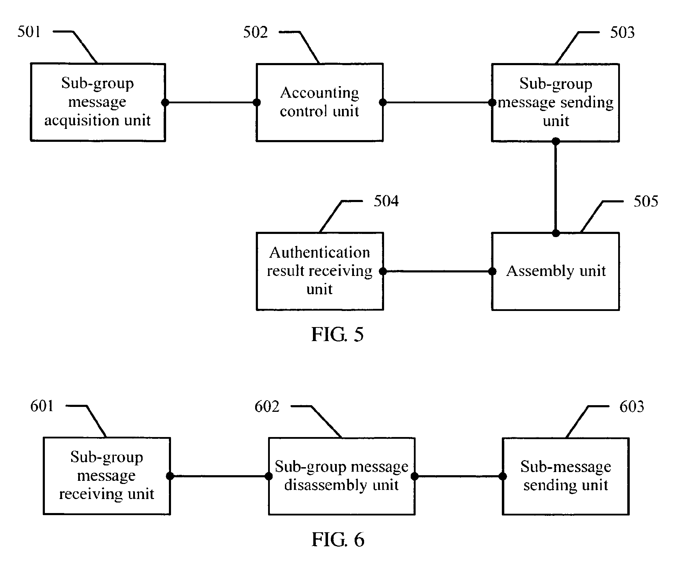

The following describes a service bus according to an embodiment of the present invention. Referring to FIG. 5, the service bus in this embodiment of the present invention includes:
a sub-group message acquisition unit 501, configured to acquire sub-group messages from an SAG, in which the sub-group messages are obtained by disassembling a group message by the SAG according to access codes that correspond to destination terminal information in the group message, and the destination terminal information in each sub-group message has the same access code;
an accounting control unit 502, configured to invoke a BSS agent to perform accounting and authentication on each piece of destination terminal information in the sub-group messages; and
a sub-group message sending unit 503, configured to send a sub-group message that is successfully accounted and authenticated to an NAG, so that the NAG delivers the sub-group message that is successfully accounted and authenticated.

In this embodiment, the service bus may further include:
an authentication result receiving unit 504, configured to receive an authentication result that is fed back by the BSS agent, in which the authentication result includes the destination terminal information that is successfully accounted and authenticated and the destination terminal information that fails to be accounted and authenticated; and
an assembly unit 505, configured to assemble a new sub-group message according to the destination terminal information that is successfully accounted and authenticated in the sub-group message, and use the new sub-group message as the sub-group message that is successfully accounted and authenticated.

In this embodiment, as accounting and authentication are performed on the sub-group messages rather than on the sub-messages, time taken for accounting and authentication can be reduced, thereby effectively improving transmission efficiency of the group message.

The following describes an NAG according to an embodiment of the present invention. Referring to FIG. 6, the NAG in this embodiment of the present invention includes:
a sub-group message receiving unit 601, configured to receive sub-group messages that are sent by an SAG, in which the sub-group messages are obtained by disassembling a group message by the SAG according to access codes that correspond to destination terminal information in the group message, and the destination terminal information in each sub-group message has the same access code;
a sub-group message disassembly unit 602, configured to disassemble the sub-group messages into sub-messages according to the destination terminal information included in the sub-group message, in which each sub-message corresponds to a piece of unique destination terminal information; and
a sub-message sending unit 603, configured to send the sub-messages to corresponding destination terminals.

In this embodiment, the sub-message sending unit 603 may specifically send the sub-messages to a message center, and then the message center sends the sub-messages to the corresponding destination terminals, and a specific sending manner is not limited herein.

In this embodiment, the sub-group message receiving unit 601 receives the sub-group messages, and the sub-group messages are disassembled in the NAG, and therefore, the message is transmitted between network elements in a form of sub-group message in the SDP before arriving at the NAG. As each sub-group message includes several pieces of destination terminal information, and the destination terminal information in each sub-group message has the same access code, compared with the prior art, by transmitting the sub-group messages in the SDP in this embodiment, the number of the messages that are transmitted in the SDP may be effectively reduced, thereby decreasing the burden of the SDP.

Persons of ordinary skill in the art may understand that all or a part of the steps of the methods according to the foregoing embodiments may be implemented by a program instructing relevant hardware. The program may be stored in a computer readable storage medium. When the program is run, the following steps are performed:
An SAG receives a group message that is sent to destination terminals, in which the group message includes destination terminal information; and
the SAG disassembles the group message into at least two sub-group messages according to access codes that correspond to the destination terminal information, in which the destination terminal information in each sub-group message has the same access code, and sends the sub-group messages to an NAG, so that the NAG disassembles the sub-group messages into sub-messages according to the destination terminal information included in the sub-group messages, in which each sub-message corresponds to a piece of unique destination terminal information, and sends the sub-messages to corresponding destination terminals.

The storage medium may be, for example, a Read Only Memory (ROM), a magnetic disk, or a Compact Disk-Read Only Memory (CD-ROM).

## Claims

1. A group message processing method comprising:
receiving, by a Service Access Gateway, SAG, (301) a group message that is sent to destination terminals, wherein the group message comprises destination terminal information; and
disassembling, by the SAG (301), the group message into at least two sub-group messages according to access codes that correspond to the destination terminal information, wherein the destination terminal information in each sub-group message has the same access code, and sending the sub-group messages to a Network Access Gateway, NAG, (304) so that the NAG (304) disassembles the sub-group messages into sub-messages according to the destination terminal information comprised in the sub-group messages, wherein each sub-message corresponds to a piece of unique destination terminal information, and sends the sub-messages to corresponding destination terminals.

2. The method according to claim 1, wherein the sending, by the SAG (301), the sub-group messages to the NAG (304) comprises:
sending, by the SAG (301), the sub-group messages to a service bus, so that the service bus invokes a Business Support System, BSS, agent corresponding to the sub-group messages to perform accounting and authentication on the sub-group messages, and sends a sub-group message that is successfully accounted and authenticated to the NAG (304).

3. The method according to claim 1 or 2, wherein after the disassembling, by the SAG (301), the group message into the at least two sub-group messages according to the access codes that correspond to the destination terminal information, the method further comprises:
judging, by the SAG (301), whether the number of pieces of the destination terminal information that are comprised in each sub-group message is greater than a preset threshold value, and if the number of pieces of the destination terminal information that are comprised in a sub-group message is greater than the preset threshold value, disassembling the sub-group message that comprises the destination terminal information with the number of pieces greater than the preset threshold value into the at least two sub-group messages, till the number of pieces of the destination terminal information that are comprised in each sub-group message is smaller than or equal to the preset threshold value.

4. The method according to claim 1 or 2, wherein the disassembling, by the SAG (301), the group message into the at least two sub-group messages according to the access codes that correspond to the destination terminal information comprises:
acquiring prefix codes or suffix codes of the destination terminal information, and using the prefix codes or the suffix codes as the access codes;
classifying the destination terminal information that has the same prefix code or the same suffix code into the same class; and
disassembling the group message into a corresponding number of sub-group messages according to the number of classes of the destination terminal information, wherein each sub-group message corresponds to one class of the destination terminal information.

5. The method according to claim 1 or 2, wherein between the step of receiving, by the SAG (301), the group message, and the step of the disassembling, by the SAG (301), the group message into the at least two sub-group messages according to the access codes that correspond to the destination terminal information, the method further comprises:
authenticating, by the SAG (301), a sender of the group message, performing the step of disassembling the group message into the at least two sub-group messages according to the access codes that correspond to the destination terminal information if the authentication is successful, and feeding back an authentication failure message to the sender if the authentication fails.

6. The method according to claim 2, wherein the invoking, by the service bus, the BSS agent corresponding to the sub-group messages to perform accounting and authentication on the sub-group messages comprises:
invoking, by the service bus, the BSS agent to perform accounting and authentication on each piece of destination terminal information in the sub-group messages, and determining the destination terminal information that is successfully accounted and authenticated and the destination terminal information that fails to be accounted and authenticated in the sub-group messages;
receiving, by the service bus, an authentication result that is fed back by the BSS agent; and
assembling, by the service bus, a new sub-group message according to the destination terminal information that is successfully accounted and authenticated in the sub-group message, and using the new sub-group message as the sub-group message that is successfully accounted and authenticated.

7. The method according to claim 2, wherein the sending, by the NAG (304), the sub-messages to the corresponding destination terminals comprises:
sending, by the NAG (304), the sub-messages to a message center, so that the message center sends the sub-messages to the corresponding destination terminals.

8. The method according to claim 7, wherein after the sending, by the NAG (304), the sub-messages to the message center, the method further comprises:
receiving, by the NAG (304), a status report that is fed back by the message center, and sending the status report to the service bus;
sending, by the service bus, the received status report to the SAG (301); and
sending, by the SAG (301), the status report to a sender of the group message.

9. The method according to claim 1 or 2, wherein the access code is a country code, an area code, or a domain name.

10. The method according to claim 1,further comprising:
receiving, by the NAG (304), sub-group messages that are sent by the SAG (301);
disassembling, by the NAG (304), the sub-group messages into sub-messages according to the destination terminal information comprised in the sub-group message, wherein each sub-message corresponds to a piece of unique destination terminal information; and
sending, by the NAG (304), the sub-messages to corresponding destination terminals.

11. The method according to claim 10, wherein the sending, by the NAG (304), the sub-messages to the corresponding destination terminals comprises:
sending, by the NAG (304), the sub-messages to a message center, so that the message center sends the sub-messages to the corresponding destination terminals.

12. A Service Delivery Platform, SDP, comprising a Service Access Gateway, SAG, (301) and a Network Access Gateway, NAG, (304),
the SAG (301) comprising:
an acquisition unit (401; 3012), configured to acquire destination terminal information from a received group message, and acquire access codes of the destination terminal information;
a classification unit (402; 3013), configured to classify the destination terminal information that has the same access code into the same class; and
an execution unit (403; 3014), configured to disassemble the group message into a corresponding number of sub-group messages according to the number of classes of the destination terminal informations, wherein each sub-group message corresponds to one class of the destination terminal information;
the NAG (304) comprising
a sub-group message receiving unit (601), configured to receive sub-group messages that are sent by the SAG (301), wherein the sub-group messages are obtained by disassembling a group message by the SAG (301) according to the access codes that correspond to destination terminal information in the group message, and the destination terminal information in each sub-group message has the same access code;
a sub-group message disassembly unit (602), configured to disassemble the sub-group message into sub-messages according to the destination terminal information comprised in the sub-group message, wherein each sub-message corresponds to a piece of unique destination terminal information; and
a sub-message sending unit (603), configured to send the sub-messages to corresponding destination erminals.

13. The SDP according to claim 12, wherein the same access code is a country code, an area code, or a domain name.

## Patentansprüche

1. Gruppennachrichten-Verarbeitungsverfahren, umfassend:
Empfangen einer Gruppennachricht durch ein Service Access Gateway SAG (301), die zu Zielendgeräten gesendet wird, wobei die Gruppennachricht Zielendgerätinformationen umfasst, und
Zerlegen der Gruppennachricht durch das SAG (301) in mindestens zwei Teilgruppennachrichten gemäß Zugangscodes, die den Zielendgerätinformationen entsprechen, wobei die Zielendgerätinformationen in jeder Teilgruppennachricht denselben Zugangscode aufweisen, und Senden der Teilgruppennachrichten zu einem Network Access Gateway NAG (304), so dass das NAG (304) die Teilgruppennachrichten gemäß den in den Teilgruppennachrichten enthaltenen Zielendgerätinformationen in Teilnachrichten zerlegt, wobei jede Teilnachricht einem Element eindeutiger Zielendgerätinformationen entspricht, und die Teilnachrichten zu entsprechenden Zielendgeräten sendet.

2. Verfahren nach Anspruch 1, wobei das Senden der Teilgruppennachrichten durch das SAG (301) zu dem NAG (304) Folgendes umfasst:
Senden der Teilgruppennachrichten durch das SAG (301) zu einem Dienstbus, so dass der Dienstbus einen den Teilgruppennachrichten entsprechenden Agenten des Business Support System BSS aufruft, um Buchhaltung und Authentifizierung an den Teilgruppennachrichten auszuführen, und eine Teilgruppennachricht, die erfolgreich verbucht und authentifiziert wird, zu dem NAG (304) sendet.

3. Verfahren nach Anspruch 1 oder 2, wobei das Verfahren nach dem Zerlegen der Gruppennachricht durch das SAG (301) in die mindestens zwei Teilgruppennachrichten gemäß den Zugangscodes, die den Zielendgerätinformationen entsprechen, ferner Folgendes umfasst:
Beurteilen durch das SAG (301), ob die Anzahl von Elementen der Zielendgerätinformationen, die in jeder Teilgruppennachricht enthalten sind, größer als ein voreingestellter Schwellenwert ist, und wenn die Anzahl der Elemente der Zielendgerätinformationen, die in einer Teilgruppennachricht enthalten sind, größer als der voreingestellte Schwellenwert ist, Zerlegen der Teilgruppennachricht, die die Zielendgerätinformationen mit der Anzahl von Elementen, die größer als der voreingestellte Schwellenwert ist, umfasst, in die mindestens zwei Teilgruppennachrichten, bis die Anzahl von Elementen der Zielendgerätinformationen, die in jeder Teilgruppennachricht enthalten sind, kleiner oder gleich dem voreingestellten Schwellenwert ist.

4. Verfahren nach Anspruch 1 oder 2, wobei das Zerlegen der Gruppennachricht durch das SAG (301) in die mindestens zwei Teilgruppennachrichten gemäß den Zugangscodes, die den Zielendgerätinformationen entsprechen, Folgendes umfasst:
Beschaffen von Präfixcodes oder Suffixcodes der Zielendgerätinformationen und Verwenden der Präfixcodes oder der Suffixcodes als die Zugangscodes;
Klassifizieren der Zielendgerätinformationen, die denselben Präfixcode oder denselben Suffixcode aufweisen, in derselben Klasse; und
Zerlegen der Gruppennachricht in eine entsprechende Anzahl von Teilgruppennachrichten gemäß der Anzahl von Klassen der Zielendgerätinformationen, wobei jede Teilgruppennachricht einer Klasse der Zielendgerätinformationen entspricht.

5. Verfahren nach Anspruch 1 oder 2, wobei das Verfahren zwischen dem Schritt des Empfangens der Gruppennachricht durch das SAG (301) und dem Schritt des Zerlegens der Gruppennachricht durch das SAG (301) in die mindestens zwei Teilgruppennachrichten gemäß den Zugangscodes, die den Zielendgerätinformationen entsprechen, ferner Folgendes umfasst:
Authentifizieren eines Absenders der Gruppennachricht durch das SAG (301), Ausführen des Schritts des Zerlegens der Gruppennachricht in die mindestens zwei Teilgruppennachrichten gemäß den Zugangscodes, die den Zielendgerätinformationen entsprechen, wenn die Authentifizierung erfolgreich ist, und Rückmelden einer Authentifizierungs-Fehlschlagnachricht an den Absender, wenn die Authentifizierung fehlschlägt.

6. Verfahren nach Anspruch 2, wobei das Aufrufen des den Teilgruppennachrichten entsprechenden BSS-Agenten durch den Dienstbus, um Buchhaltung und Authentifizierung an den Teilgruppennachrichten auszuführen, Folgendes umfasst:
Aufrufen des BSS-Agenten durch den Dienstbus, um Buchhaltung und Authentifizierung an jedem Element von Zielendgerätinformationen in den Teilgruppennachrichten auszuführen, und Bestimmen der Zielendgerätinformationen, die erfolgreich verbucht und authentifiziert werden, und der Zielendgerätinformationen, die nicht verbucht und authentifiziert werden können, in den Teilgruppennachrichten;
Empfangen eines Authentifizierungsergebnisses durch den Dienstbus, das durch den BSS-Agenten rückgemeldet wird; und
Zusammenstellen einer neuen Teilgruppennachricht durch den Dienstbus gemäß den Zielendgerätinformationen, die in der Teilgruppennachricht erfolgreich verbucht und authentifiziert wird, und Verwenden der neuen Teilgruppennachricht als die Teilgruppennachricht, die erfolgreich verbucht und authentifiziert wird.

7. Verfahren nach Anspruch 2, wobei das Senden der Teilnachrichten durch das NAG (304) zu den entsprechenden Zielendgeräten Folgendes umfasst:
Senden der Teilnachrichten durch das NAG (304) zu einer Nachrichtenstelle, so dass die Nachrichtenstelle die Teilnachrichten zu den entsprechenden Zielendgeräten sendet.

8. Verfahren nach Anspruch 7, wobei das Verfahren nach dem Senden der Teilnachrichten durch das NAG (304) zu der Nachrichtenstelle ferner Folgendes umfasst:
Empfangen einer Statusmeldung durch das NAG (304), die von der Nachrichtenstelle rückgemeldet wird, und Senden der Statusmeldung zu dem Dienstbus;
Senden der empfangenen Statusmeldung durch den Dienstbus zu dem SAG (301); und
Senden der Statusmeldung durch das SAG (301) zu einem Absender der Gruppennachricht.

9. Verfahren nach Anspruch 1 oder 2, wobei der Zugangscode eine Auslandskennzahl, eine Bereichskennzahl oder ein Domänenname ist.

10. Verfahren nach Anspruch 1, ferner umfassend:
Empfangen von Teilgruppennachrichten durch das NAG (304), die durch das SAG (301) gesendet werden;
Zerlegen der Teilgruppennachrichten durch das NAG (304) zu Teilnachrichten gemäß den Zielendgerätinformationen, die in der Teilgruppennachricht enthalten sind, wobei jede Teilnachricht einem Element eindeutiger Zielendgerätinformationen entspricht; und
Senden der Teilnachrichten durch das NAG (304) zu entsprechenden Zielendgeräten.

11. Verfahren nach Anspruch 10, wobei das Senden der Teilnachrichten durch das NAG (304) zu den entsprechenden Zielendgeräten Folgendes umfasst:
Senden der Teilnachrichten durch das NAG (304) zu einer Nachrichtenstelle, so dass die Nachrichtenstelle die Teilnachrichten zu den entsprechenden Zielendgeräten sendet.

12. Service Delivery Platform SDP, die ein Service Access Gateway SAG (301) und ein Network Access Gateway NAG (304) umfasst,
wobei das SAG (301) Folgendes umfasst:
eine Beschaffungseinheit (401; 3012), die dafür ausgelegt ist, Zielendgerätinformationen aus einer empfangenen Gruppennachricht zu beschaffen und Zugangscodes der Zielendgerätinformationen zu beschaffen;
eine Klassifizierungseinheit (402; 3013), die dafür ausgelegt ist, die Zielendgerätinformationen, die denselben Zugangscode aufweisen, in derselben Klasse zu klassifizieren; und
eine Ausführungseinheit (403; 3014), die dafür ausgelegt ist, die Gruppennachricht gemäß der Anzahl der Klassen der Zielendgerätinformationen in eine entsprechende Anzahl von Teilgruppennachrichten zu zerlegen, wobei jede Teilgruppennachricht einer Klasse der Zielendgerätinformationen entspricht;
wobei das NAG (304) Folgendes umfasst:
eine Teilgruppennachrichten-Empfangseinheit (601), die dafür ausgelegt ist, Teilgruppennachrichten, die durch das SAG (301) gesendet werden, zu empfangen, wobei die Teilgruppennachrichten durch Zerlegen einer Gruppennachricht durch das SAG (301) gemäß den Zugangscodes, die Zielendgerätinformationen in der Gruppennachricht entsprechen, erhalten werden und die Zielendgerätinformationen in jeder Teilgruppennachricht denselben Zugangscode aufweisen;
eine Teilgruppennachricht-Zerlegungseinheit (602), die dafür ausgelegt ist, die Teilgruppennachricht gemäß den in der Teilgruppennachricht enthaltenen Zielendgerätinformationen in Teilnachrichten zu zerlegen, wobei jede Teilnachricht einem Element eindeutiger Zielendgerätinformationen entspricht; und
eine Teilnachrichten-Sendeeinheit (603), die dafür ausgelegt ist, die Teilnachrichten zu entsprechenden Zielendgeräten zu senden.

13. SDP nach Anspruch 12, wobei derselbe Zugangscode eine Auslandskennzahl, eine Bereichskennzahl oder ein Domänenname ist.

## Revendications

1. Procédé de traitement de message de groupe, comprenant :
la réception, par une Passerelle d'Accès de Service, SAG (301), d'un message de groupe qui est envoyé à des terminaux destinataires, le message de groupe comprenant des informations de terminaux destinataires ; et
le désassemblage, par la SAG (301), du message de groupe en au moins deux messages de sous-groupe en fonction de codes d'accès qui correspondent aux informations de terminaux destinataires, les informations de terminaux destinataires dans chaque message de sous-groupe ayant le même code d'accès, et l'envoi des messages de sous-groupe à une Passerelle d'Accès Réseau, NAG (304), de telle sorte que la NAG (304) désassemble les messages de sous-groupe en sous-messages en fonction des informations de terminaux destinataires comprises dans les messages de sous-groupe, chaque sous-message correspondant à un élément d'informations de terminaux destinataires uniques, et envoie les sous-messages aux terminaux destinataires correspondants.

2. Procédé selon la revendication 1, dans lequel l'envoi, par la SAG (301), des messages de sous-groupe à la NAG (304) comprend :
l'envoi, par la SAG (301), des messages de sous-groupe à un bus de service, de telle sorte que le bus de service sollicite un agent de Système de Support Commercial, BSS, correspondant aux messages de sous-groupe pour exécuter une comptabilisation et une authentification sur les messages de sous-groupe, et envoie un message de sous-groupe qui est correctement comptabilisé et authentifié à la NAG (304).

3. Procédé selon la revendication 1 ou 2, comprenant en outre après le désassemblage, par la SAG (301), du message de groupe en les au moins deux messages de sous-groupe en fonction des codes d'accès qui correspondent aux informations de terminaux destinataires :
le jugement, par la SAG (301), que le nombre d'éléments des informations de terminaux destinataires qui sont compris dans chaque message de sous-groupe est supérieur à une valeur de seuil préétablie, et si le nombre d'éléments des informations de terminaux destinataires qui sont compris dans un message de sous-groupe est supérieur à la valeur de seuil préétablie, le désassemblage du message de sous-groupe qui comprend les informations de terminaux destinataires avec le nombre d'éléments supérieur à la valeur de seuil préétablie en les au moins deux messages de sous-groupe, jusqu'à ce que le nombre d'éléments des informations de terminaux destinataires qui sont compris dans chaque message de sous-groupe soit inférieur ou égal à la valeur de seuil préétablie.

4. Procédé selon la revendication 1 ou 2, dans lequel le désassemblage, par la SAG (301), du message de groupe en les au moins deux messages de sous-groupe en fonction des codes d'accès qui correspondent aux informations de terminaux destinataires comprend :
l'acquisition de codes de préfixe ou de codes de suffixe des informations de terminaux destinataires, et l'utilisation des codes de préfixe ou des codes de suffixe comme codes d'accès ;
la classification des informations de terminaux destinataires qui ont le même code de préfixe ou le même code de suffixe dans la même classe ; et
le désassemblage du message de groupe en un nombre correspondant de messages de sous-groupe en fonction du nombre de classes des informations de terminaux destinataires, chaque message de sous-groupe correspondant à une classe des informations de terminaux destinataires.

5. Procédé selon la revendication 1 ou 2, comprenant en outre, entre l'étape de réception, par la SAG (301), du message de groupe, et l'étape de désassemblage, par la SAG (301), du message de groupe en les au moins deux messages de sous-groupe en fonction des codes d'accès qui correspondent aux informations de terminaux destinataires :
l'authentification, par la SAG (301), d'un expéditeur du message de groupe, l'exécution de l'étape de désassemblage du message de groupe en les au moins deux messages de sous-groupe en fonction des codes d'accès qui correspondent aux informations de terminaux destinataires si l'authentification est positive, et le renvoi d'un message d'authentification négative à l'expéditeur si l'authentification échoue.

6. Procédé selon la revendication 2, dans lequel la sollicitation, par le bus de service, de l'agent BSS correspondant aux messages de sous-groupe, pour exécuter la comptabilisation et l'authentification sur les messages de sous-groupe comprend :
la sollicitation, par le bus de service, de l'agent BSS pour exécuter la comptabilisation et l'authentification sur chaque élément des informations de terminaux destinataires dans les messages de sous-groupe, et la détermination des informations de terminaux destinataires qui sont correctement comptabilisées et authentifiées et des informations de terminaux destinataires qui ne sont pas comptabilisées et authentifiées dans les messages de sous-groupes ;
la réception, par le bus de service, d'un résultat d'authentification qui est renvoyé par l'agent BSS ; et
l'assemblage, par le bus de service, d'un nouveau message de sous-groupe en fonction des informations de terminaux destinataires qui sont correctement comptabilisées et authentifiées dans le message de sous-groupe, et l'utilisation du nouveau message de sous-groupe comme message de sous-groupe qui est correctement comptabilisé et authentifié.

7. Procédé selon la revendication 2, dans lequel l'envoi, par la NAG (304), des sous-messages aux terminaux destinataires correspondants comprend :
l'envoi, par la NAG (304), des sous-messages à un centre de messages, de telle sorte que le centre de messages envoie les sous-messages aux terminaux destinataires correspondants.

8. Procédé selon la revendication 7, comprenant en outre, après l'envoi, par la NAG (304), des sous-messages au centre de messages :
la réception, par la NAG (304), d'un rapport d'état qui est renvoyé par le centre de messages, et l'envoi du rapport d'état au bus de service ;
l'envoi, par le bus de service, du rapport d'état reçu à la SAG (301) ; et
l'envoi, par la SAG (301), du rapport d'état à un expéditeur du message de groupe.

9. Procédé selon la revendication 1 ou 2, dans lequel le code d'accès est un indicatif national, un indicatif régional ou un nom de domaine.

10. Procédé selon la revendication 1, comprenant en outre :
la réception, par la NAG (304), de messages de sous-groupe qui sont envoyés par la SAG (301) ;
le désassemblage, par la NAG (304), des messages de sous-groupe en sous-messages en fonction des informations de terminaux destinataires comprises dans le message de sous-groupe, chaque sous-message correspondant à un élément d'informations de terminaux destinataires uniques ; et
l'envoi, par la NAG (304), des sous-messages aux terminaux destinataires correspondants.

11. Procédé selon la revendication 10, dans lequel l'envoi, par la NAG (304), des sous-messages aux terminaux destinataires correspondants comprend :
l'envoi, par la NAG (304), des sous-messages à un centre de messages, de telle sorte que le centre de messages envoie les sous-messages aux terminaux destinataires correspondants.

12. Plate-forme de Délivrance de Service, SDP, comprenant une Passerelle d'Accès de Service, SAG (301) et une Passerelle d'Accès Réseau, NAG (304),
la SAG (301) comprenant :
une unité d'acquisition (401 ; 3012), configurée pour acquérir des informations de terminaux destinataires depuis un message de groupe reçu, et acquérir des codes d'accès des informations de terminaux destinataires ;
une unité de classification (402 ; 3013), configurée pour classifier les informations de terminaux destinataires qui ont le même code d'accès dans la même classe ; et
une unité d'exécution (403 ; 3014), configurée pour désassembler le message de groupe en un nombre correspondant de messages de sous-groupe en fonction du nombre de classes des informations de terminaux destinataires, chaque message de sous-groupe correspondant à une classe des informations de terminaux destinataires ; la NAG (304) comprenant
une unité de réception de messages de sous-groupe (601), configurée pour recevoir des messages de sous-groupe qui sont envoyés par la SAG (301), les messages de sous-groupe étant obtenus en désassemblant un message de groupe par la SAG (301) en fonction des codes d'accès qui correspondent aux informations de terminaux destinataires dans le message de groupe, et les informations de terminaux destinataires dans chaque message de sous-groupe ayant le même code d'accès ;
une unité de désassemblage de message de sous-groupe (602), configurée pour désassembler le message de sous-groupe en sous-messages en fonction des informations de terminaux destinataires compris dans le message de sous-groupe, chaque sous-message correspondant à un élément d'informations de terminaux destinataires uniques ; et
une unité d'envoi de sous-messages (603), configurée pour envoyer les sous-messages aux terminaux destinataires correspondants.

13. SDP selon la revendication 12, dans laquelle le même code d'accès est un indicatif national, un indicatif régional ou un nom de domaine.
